# EUROPÄISCHE PATENTSCHRIFT

(11) **EP 2 577 852 B1**
(45) Veröffentlichungstag und Bekanntmachung des Hinweises auf die Patenterteilung: **16.07.2014**
(21) Anmeldenummer: 11723909.5
(22) Anmeldetag: 24.05.2011
(51) Int. Cl.: H02K 15/00, H02K 17/16

(54) **KÄFIGLÄUFER FÜR EINE ASYNCHRONMASCHINE UND VERFAHREN ZUR HERSTELLUNG DES KÄFIGLÄUFERS**
CAGE ROTOR FOR AN ASYNCHRONOUS MACHINE AND METHOD FOR PRODUCING THE CAGE ROTOR
INDUIT À CAGE D'ÉCUREUIL POUR UNE MACHINE ASYNCHRONE ET PROCÉDÉ DE FABRICATION DE L'INDUIT À CAGE D'ÉCUREUIL

(30) Priorität: 25.05.2010 DE 102010021470
(43) Veröffentlichungstag der Anmeldung: 10.04.2013
(73) Patentinhaber: Siemens Aktiengesellschaft, 80333 München (DE)
(72) Erfinder: BIESENBACH, Martin, 40225 Düsseldorf (DE); BODE, Ralf, 47441 Moers (DE)
(86) Internationale Anmeldenummer: PCT/EP2011/058500
(87) Internationale Veröffentlichungsnummer: WO 2011/147846

(56) Entgegenhaltungen:
- WO-A1-2005/124973
- WO-A1-2010/052226
- DE-A1- 19 746 195
- JP-A- 2001 211 615

## Beschreibung

Die Erfindung betrifft einen Käfigläufer für eine Asynchronmaschine und ein Verfahren zur Herstellung des Käfigläufers.

Eine Asynchronmaschine, wie beispielsweise ein Asynchronmotor oder ein Asynchrongenerator, weist einen Käfigläufer mit einer Mehrzahl an Leiterstäben auf, die nebeneinanderliegend am Umfang des Käfigläufers und in Axialrichtung sich erstreckend angeordnet sind. An ihren Längsenden sind die Leiterstäbe jeweils mit einem Kurzschlussring miteinander elektrisch leitend verbunden. Bei Asynchronmaschinen ab einer bestimmten Leistungsklasse treten Umfangsgeschwindigkeiten am Käfigläufer auf, die etwa bei 250 m/s liegen können. Bei diesen hohen Umfangsgeschwindigkeiten sind besondere Anforderungen an die Festigkeit des Käfigläufers gestellt, wobei es bekannt ist den Käfigläufer in massiver Bauform auszuführen. Der Käfigläufer weist einen Läuferkörper auf, der über den Umfang gleichmäßig verteilt Längsnuten aufweist, in die die Leiterstäbe eingelegt sind. Herkömmlich sind die Leiterstäbe aus Kupfer-, Silber- oder Aluminiumlegierungen, wohingegen der Läuferkäfig herkömmlich aus Stahl gefertigt ist.

Beim Betrieb der Asynchronmaschine sind insbesondere die Leiterstäbe einer Fliehkraft ausgesetzt, die so hoch sein kann, dass die Leiterstäbe aus den Leiterstabnuten herausgehoben werden. Zur Abhilfe wird herkömmlich eine formschlüssige Verbindung zwischen den Leiterstäben und dem Läuferkörper vorgesehen. Dies wird beispielsweise dadurch erreicht, dass die Leiterstäbe in dem Läuferkörper derart angeordnet und hergestellt sind, dass in Radialrichtung die Leiterstäbe von dem Material des Läuferkörpers hinterschnitten sind. Somit ist eine formschlüssige

Verbindung zwischen den Leiterstäben und dem Läuferkörper hergestellt, die jedoch insbesondere bei An- und Abfahrvorgängen der Asynchronmaschine einem Ermüden und/oder Kriechen unterworfen ist.

In JP 2001 211615 A ist ein Rotor mit einem Käfig beschrieben, wobei der Käfig durch heißisostatischen Pressens eines Pulvers hergestellt wird. In WO 2005/124973 A1 ist ein Verfahren zum Herstellen eines Rotors offenbart, bei dem leitfähige Stäbe in longitudinale Fugen positioniert und anschließend druckbehandelt und wärmebehandelt werden.

In WO 2010/052226 ist ein Verfahren zum Herstellen eines Käfigläufers beschrieben, wobei die Läuferkäfigbauteile in Ausnehmungen des Läuferkerns gelegt werden. Anschließend wird durch eine Erwärmung des Läuferkerns und der Läuferkäfigbauteile unterhalb ihrer Schmelztemperatur zwischen den Bauteilen ein Diffusionsverbund hergestellt.

Aufgabe der Erfindung ist es einen Käfigläufer für eine Asynchronmaschine und ein Verfahren zur Herstellung des Käfigläufers zu schaffen, wobei der Käfigläufer eine hohe Festigkeit und einen hohen elektromagnetischen Wirkungsgrad hat.

Das erfindungsgemäße Verfahren zur Herstellung eines Käfigläufers für eine Asynchronmaschine weist die Schritte gemäß Anspruch 1 auf. Der erfindungsgemäße Käfigläufer, der mit dem Verfahren gemäß einem der Ansprüche 1 bis 4 hergestellt ist, weist einen Läuferkörper auf, der einen Leiterstababschnitt aufweist, der eine Mehrzahl an Leiterstabnuten mit jeweils darin eingebauten Leiterstäben aufweist, wobei die Leitstabnuten jeweils von zwei parallel zueinander angeordneten Nutflanken und einem sich zwischen den Nutflanken erstreckenden Nutgrund gebildet sind.

Durch das Vorsehen der Leiterstabnuten ist der Läuferkörper als ein Rohling vorbereitet und kann in eine entsprechende Gussform eingelegt werden. Dann wird mit einem Druckgussverfahren das Leiterstabmaterial in die Leiterstabnuten eingebracht, so dass der Käfigläufer in situ hergestellt wird. Die metallurgische Bindung ist zwischen dem Leiterstabmaterial und dem Läuferkörpermaterial an den Grenzflächen zwischen den Leiterstäben und dem Läuferkörper ausgebildet, so dass eine direkte metallische Anbindung von den Leiterstäben an dem Läuferkörper hergestellt ist. Dadurch sind die Leiterstäbe stabil in den Leiterstabnuten gehalten, so dass eine zusätzliche formschlüssige Verbindung zwischen den Leiterstäben und dem Läuferkörper, etwa in Form eines Schwalbenschwanzprofils, nicht vorgesehen zu werden braucht. Dadurch kann der Querschnitt der Leiterstäbe im Prinzip beliebig und somit optimiert hinsichtlich der elektrischen Eigenschaften des Käfigläufers gestaltet werden. Durch das Vermeiden der formschlüssigen Verbindung zwischen den Leiterstäben und dem Läuferkörper ist eine Ermüdung oder ein Kriechen des Käfigläufers im Bereich der Leiterstabnuten unterbunden, so dass der Käfigläufer eine hohe Festigkeit hat.

Der Bereich mit der metallurgischen Bindung ist erfindungsgemäß ein Diffusionsbereich, in dem das Leiterstabmaterial und das Käfigmaterial ineinander diffundieren. Dabei ist es erfindungsgemäß, dass zum Ineinanderdiffundieren des Leiterstabmaterials und des Läuferkörpermaterials in den Leiterstabnuten vor dem Druckgießen jeweils eine haftvermittelnde Schicht angebracht wird. Die haftvermittelnde Schicht ist erfindungsgemäß derart gewählt, dass durch das Druckgießen das Ineinanderdiffundieren des Leiterstabmaterials und des Läufermaterials bewirkt wird. Alternativ ist es bevorzugt, dass die haftvermittelnde Schicht derart gewählt ist, dass durch heißisostatisches Pressen das Ineinanderdiffundieren des Käfigmaterials und des Läuferkörpermaterials verstärkt wird. Die Leiterstäbe sowie die Kurzschlussringe sind bevorzugt aus Kupfer und die haftvermittelnde Schicht ist bevorzugt nickelhaltig. Alternativ ist es bevorzugt, dass die Leiterstäbe sowie die Kurzschlussringe aus Aluminium und die haftvermittelnde Schicht zinkhaltig sind.

Hinsichtlich der optimierten elektrischen Eigenschaften ist jeder Nutgrund konvex ausgebildet, so dass die Leiterstäbe bevorzugt an ihrer radial innenliegenden Seite jeweils unter Ausbilden eines Leiterstabrückens abgerundet sind. Hierbei ist es bevorzugt, dass die Querschnitte der Leiterstäbe in Radialrichtung breiter als in Umfangsrichtung ausgebildet sind. Durch diese Ausgestaltung hat der Käfigläufer optimierte elektromagnetische Eigenschaften, wodurch der elektromagnetische Wirkungsgrad des Käfigläufers hoch ist.

Im Folgenden werden bevorzugte Ausführungsbeispiele eines erfindungsgemäßen Käfigläufers anhand der beigefügten schematischen Zeichnungen erläutert. Es zeigen:
Figur 1 eine Draufsicht eines erfindungsgemäßen Käfigläufers,
Figur 2 eine Draufsicht des Käfigläufers aus Figur 1 ohne Leiterstäbe und Kurzschlussringe und
Figuren 3 bis 5 Querschnitte des Käfigläufers aus Figur 1 mit verschiedenen Ausführungsformen von Leiterstäben.

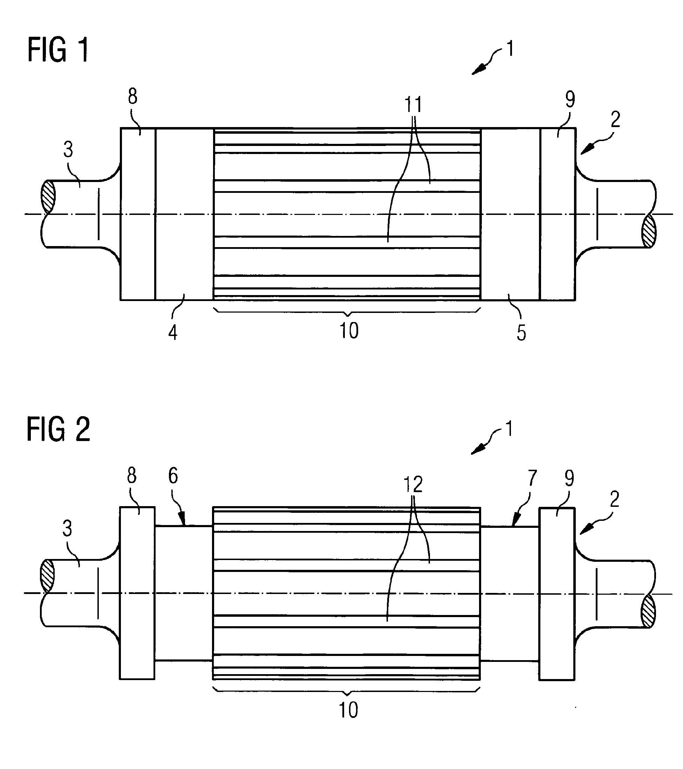

Wie es aus Figuren 1 und 2 ersichtlich ist, weist ein erfindungsgemäßer Käfigläufer 1 einen Läuferkörper 2 auf, der mit einer Welle 3 in einer Asynchronmaschine, beispielsweise einem Asynchronmotor oder einem Asynchrongenerator, drehbar gelagert werden kann. Der Läuferkörper 2 ist zylindrisch ausgebildet und weist an seinem Außenumfang einen ersten Kurzschlussring 4 und einen zweiten Kurzschlussring 5 auf. Die Kurzschlussringe 4, 5 sind jeweils in einer Kurzschlussringaussparung 6, 7 untergebracht, die jeweils von einem stirnseitig angeordneten ersten Steg 8 bzw. einem dem ersten Steg 8 gegenüberliegenden zweiten Steg 9 gebildet ist. Zwischen den Kurzschlussringaussparungen 6, 7 ist ein Leiterstababschnitt 10 vorgesehen, in dem Leiterstäbe 11 eingebaut sind. Die Leiterstäbe 11 sind gleichmäßig über den Umfang des Läuferkörpers 2 verteilt und mit ihren Längsenden jeweils an die Kurzschlussringe 4, 5 elektrisch leitend angeschlossen. In dem Leiterabschnitt 10 ist für jeden Leiterstab 11 eine Leiterstabnut 12 vorgesehen, in die der ihr zugeordneter Leiterstab 11 eingelegt ist.

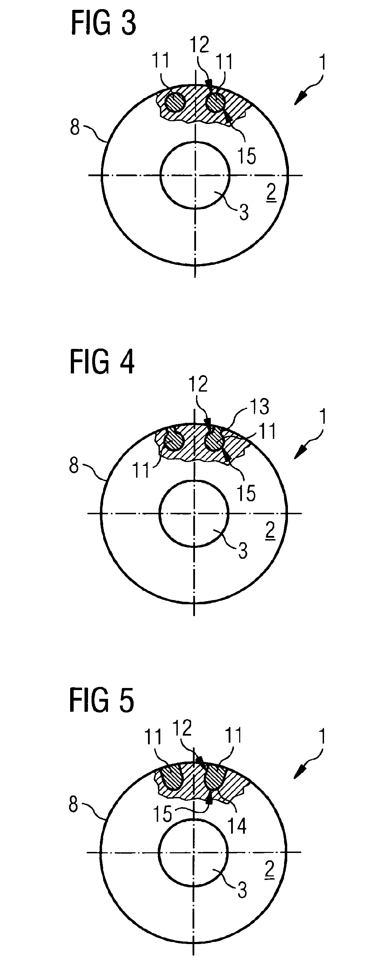

In Figuren 3 bis 5 sind verschiedene Ausführungsformen von Querschnitten von den Leiterstäben 11 gezeigt. Gemäß Figur 3 sind die Leiterstäbe 11 im Querschnitt kreisrund ausgebildet und vollständig von dem Material des Läuferkörpers 2 umschlossen in den Läuferkörper 2 eingebaut. Die Leiterstäbe 11 gemäß Figur 4 unterscheiden sich von den Leiterstäben 11 gemäß Figur 3 dahingehend, dass an ihren Außenumfängen jeweils ein Leiterstabsteg 13 vorgesehen ist, mit dem das Läuferkörpermaterial zur Außenoberfläche des Läuferkörpers 2 hin durchgedrungen ist. Gemäß Figur 5 sind die Leiterstäbe 11 in ihren Querschnitten derart ausgebildet, daß an den radial innenliegenden Seiten der Leiterstäbe 11 ein konvexer Leiterstabrücken 14 ausgebildet ist. Die Querschnitte der Leiterstäbe 11 sind in ihrer Erstreckung in Umfangsrichtung kürzer als in ihrer Erstreckung in Radialrichtung ausgebildet, wobei die Leiterstäbe 11 mit der zylinderförmigen Außenseite des Leiterstababschnitts 10 bündig abschließen.

Der Läuferkörper 2 wird wie folgt hergestellt: Zuerst ist ein Rohling des Läuferkörpers 2 herzustellen, indem der Läuferkörper 2 als ein Zylinder mit einer stirnseitig daran angebauten Welle 3 herzustellen ist. In dem Rohling sind die Kurzschlussringaussparungen 6 vorzusehen, wobei an den Kurzschlussringaussparungen 6, 7 der erste Steg 8 bzw. der zweite Steg 9 ausgebildet werden. Zwischen den Kurzschlussringaussparungen 6, 7 wird der Leiterstabschnitt 10 als ein zylindrischer Abschnitt des Läuferkörpers 2 hergestellt. Sodann werden in den Läuferkörper 2 die Leiterstabnuten 12 eingebracht. Danach wird der Läuferkörper 2 in eine Gussform gelegt, wobei durch Druckgießen in die einzelnen Leiterstabnuten 12 sowie in die Kurzschlussringsaussparungen 6, 7 Käfigmaterial in situ gegeben wird, so dass in den Leiterstabnuten 12 von dem Leiterstabmaterial die Leiterstäbe 11 sowie in den Kurzschlussringaussparungen 6, 7 die Kurzschlussringe 4, 5 ausgebildet werden. Beim Druckgießen wird in dem Leiterstabmaterial und dem Läufermaterial an den Grenzflächen zwischen den Leiterstäben 11 und dem Läuferkörper 2 ein Bereich ausgebildet, der eine metallurgische Bindung zwischen dem Leiterstabmaterial und dem Läuferkörpermaterial aufweist. Die metallurgische Bindung ist derart ausgebildet, dass an den Grenzflächen die Leiterstäbe 11 beim Betrieb des Käfigläufers 1 in den Leiterstabnuten 12 und die Kurzschlussringe 4, 5 in den Kurzschlussringsaussparungen 6, 7 gehalten werden. Beim Druckgießen bildet sich der Bereich mit der metallurgischen Verbindung als ein Diffusionsbereich aus, indem das Leiterstabmaterial und das Läuferkörpermaterial ineinander diffundieren.

Vor dem Druckgießen kann zum Ineinanderdiffundieren des Leiterstabmaterials und des Läuferkörpermaterials in den Leiterstabnuten 12 jeweils eine haftvermittelnde Schicht angebracht werden. Die haftvermittelnde Schicht bewirkt, dass beim Druckgießen das Ineinanderdiffundieren des Käfigmaterials und des Läuferkörpers 2 vonstatten geht. Durch einen heißisostatischen Pressprozess kann nach dem Druckgießen das Ineinanderdiffundieren an den Oberflächen der Käfigkomponenten Leiterstäbe 11 und Kurzschlussringe 4, 5 und des Läuferkörpermaterials verstärkt werden.

Sind die Leiterstäbe aus Kupfer, so ist die haftvermittelnde Schicht nickelhaltig. Sind dagegen die Leiterstäbe aus Aluminium, so ist die haftvermittelnde Schicht zinkhaltig.

## Patentansprüche

1. Verfahren zur Herstellung eines Käfigläufers (1) für eine Asynchronmaschine, mit den Schritten:
- Bereitstellen eines Läuferkörpers (2) mit einem Leiterstababschnitt (10), in dem eine Mehrzahl an Leiterstäben (11) vorzusehen ist;
- Fertigen von Leiterstabnuten (12) in den Leiterstababschnitt (10), wobei für jeden der Leiterstäbe (11) eine der Leiterstabnuten (12) vorgesehen ist, und Fertigen von Kurzschlussringaussparungen (6, 7) für Kurzschlussringe (4, 5), wobei in die Kurzschlussringaussparungen (6, 7) die Leiterstabnuten (12) jeweils münden;
- Druckgießen von Käfigmaterial in die Leiterstabnuten (12) in situ, so dass in den Leiterstabnuten (12) von dem Leiterstabmaterial die Leiterstäbe (10) ausgebildet werden und in den Kurzschlussringsaussparungen (6, 7) die Kurzschlussringe (4, 5) ausgebildet werden;
- Erzeugen eines Bereichs in dem Leiterstabmaterial und dem Läuferkörpermaterial, der eine metallurgische Bindung zwischen dem Leiterstabmaterial und dem Läuferkörpermaterial an Grenzflächen zwischen den Leiterstäben (10) und dem Läuferkörper (2) aufweist, wobei der Bereich mit der metallurgischen Bindung ein Diffusionsbereich ist, in dem das Käfigmaterial und das Läuferkörpermaterial ineinander diffundieren, und zum Ineinanderdiffundieren des Leiterstabmaterials und des Läuferkörpermaterials in den Leiterstabnuten (12) vor dem Druckgießen jeweils eine haftvermittelnde Schicht angebracht wird, die derart gewählt ist, dass durch das Druckgießen das Ineinanderdiffundieren des Leiterstabmaterials und des Läuferkörpermaterials bewirkt wird, wodurch die metallurgische Bindung derart ausgebildet wird, dass an den Grenzflächen die Leiterstäbe (10) beim Betrieb des Käfigläufers (1) in den Leiterstabnuten (12) gehalten werden und die Kurzschlussringe (4, 5) in den Kurzschlussringsaussparungen (6, 7) gehalten werden.

2. Verfahren gemäß Anspruch 1,
wobei die haftvermittelnde Schicht derart gewählt ist, dass durch heißisostatisches Pressen das Ineinanderdiffundieren des Käfigmaterials und des Läuferkörpermaterials verstärkt wird.

3. Verfahren gemäß Anspruch 1 oder 2,
wobei die Leiterstäbe (11) sowie die Kurzschlussringe (4, 5) aus Kupfer und die haftvermittelnde Schicht nickelhaltig sind.

4. Verfahren gemäß einem der Ansprüche 1 oder 2,
wobei die Leiterstäbe (11) sowie die Kurzschlussringe (4, 5) aus Aluminium und die haftvermittelnde Schicht zinkhaltig sind.

5. Käfigläufer für eine Asynchronmaschine, mit einem Läuferkörper (2), der einen Leiterstababschnitt (10) aufweist, der eine Mehrzahl an Leiterstabnuten (12) mit jeweils darin eingebauten Leiterstäben (11) aufweist, wobei die Leitstabnuten (12) jeweils von zwei parallel zueinander angeordneten Nutflanken und einem sich zwischen den Nutflanken erstreckenden Nutgrund gebildet sind und der Käfigläufer (1) mit einem Verfahren gemäß einem der Ansprüche 1 bis 4 hergestellt ist.

6. Käfigläufer gemäß Anspruch 5,
wobei jeder Nutgrund konvex ausgebildet ist, so dass die Leiterstäbe (11) an ihrer radial innen liegenden Seite jeweils unter Ausbilden eines Leiterstabrückens (14) abgerundet sind.

7. Käfigläufer gemäß Anspruch 6,
wobei die Querschnitte der Leiterstäbe (11) in Radialrichtung breiter als in Umfangsrichtung ausgebildet sind.

## Claims

1. Method for producing a cage rotor (1) for an asynchronous machine, comprising the steps of:
- providing a rotor body (2) having a conductor bar segment (10), in which a plurality of conductor bars (11) are provided;
- producing conductor bar slots (12) in the conductor bar segment (10), wherein one of the conductor bar slots (12) is provided for each of the conductor bars (11), and producing short-circuiting ring recesses (6, 7) for short-circuiting rings (4, 5), wherein the conductor bar slots (12) respectively open out into the short-circuiting ring recesses (6, 7);
- diecasting cage material into the conductor bar slots (12) in situ, so that the conductor bars (10) are formed in the conductor bar slots (12) by the conductor bar material and the short-circuiting rings (4, 5) are formed in the short-circuiting ring recesses (6, 7);
- creating in the conductor bar material and the rotor body material a region that has a metallurgical bond between the conductor bar material and the rotor body material at interfaces between the conductor bars (10) and the rotor body (2), wherein the region with the metallurgical bond is a diffusion region, in which the cage material and the rotor body material diffuse into one another, and, for the interdiffusion of the conductor bar material and the rotor body material, an adhesion-promoting layer is respectively provided in the conductor bar slots (12) before the diecasting, being chosen such that the interdiffusion of the conductor bar material and the rotor body material is brought about by the diecasting, whereby the metallurgical bond is formed such that, at the interfaces, the conductor bars (10) are retained in the conductor bar slots (12) during the operation of the cage rotor (1) and the short-circuiting rings (4, 5) are retained in the short-circuiting ring recesses (6, 7).

2. Method according to Claim 1,
wherein the adhesion-promoting layer is chosen such that the interdiffusion of the cage material and the rotor body material is intensified by hot-isostatic pressing.

3. Method according to Claim 1 or 2,
wherein the conductor bars (11) and the short-circuiting rings (4, 5) are of copper and the adhesion-promoting layer contains nickel.

4. Method according to one of Claims 1,
wherein the conductor bars (11) and the short-circuiting rings (4, 5) are of aluminum and the adhesion-promoting layer contains zinc.

5. Cage rotor for an asynchronous machine, comprising a rotor body (2), which has a conductor bar segment (10), which has a plurality of conductor bar slots (12) with conductor bars (11) that have a rectangular cross section respectively fitted therein, wherein the conductor bar slots (12) are respectively formed by two slot flanks arranged parallel to one another and a slot root extending between the slot flanks and the cage rotor (1) has been produced by a method according to one of Claims 1 to 4.

6. Cage rotor according to Claim 5,
wherein each slot root is convexly formed, so that the conductor bars (11) are rounded off respectively on their radially inner side, to form a conductor bar back (14).

7. Cage rotor according to Claim 6,
wherein the cross sections of the conductor bars (11) are formed wider in the radial direction than in the circumferential direction.

## Revendications

1. Procédé de fabrication d'un rotor ( 1 ) à cage d'écureuil pour un moteur asynchrone comprenant les stades :
- de mise à disposition d'un corps ( 2 ) rotorique ayant une section ( 10 ) de barres conductrices dans laquelle une multiplicité de barres ( 11 ) conductrices est prévue,
- de fabrication d'encoches ( 12 ) de barres conductrices dans la section ( 10 ) de barres conductrices, dans lequel l'une des encoches (12) de barres conductrices est prévue pour chacune des barres ( 11 ) conductrices et
de fabrication d'évidements (6, 7) annulaires de court-circuit pour des bagues ( 4, 5 ) de court-circuit, les encoches (12) de barres conductrices débouchant respectivement dans les évidements (6, 7) annulaires de court-circuit,
- de coulée sous pression de matériau de cage dans les encoches ( 12 ) de barres conductrices in situ de manière à former les barres (10) conductrices par le matériau des barres conductrices dans les encoches (12) de barres conductrices et à former les bagues ( 4 , 5 ) de court-circuit dans les évidements ( 6 , 7 ) annulaires de court-circuit
- de production d'une zone dans le matériau des barres conductrices et dans le matériau du corps rotorique, qui a une liaison métallurgique entre le matériau de barres conductrices et le matériau de corps rotorique aux surfaces limites entre les barres ( 10 ) et le corps ( 2 ) rotorique, la zone ayant la liaison métallurgique étant une zone de diffusion, dans laquelle le matériau de la cage et le matériau du corps rotorique diffusent l'un dans l'autre et, pour la diffusion l'un dans l'autre du matériau des barres conductrices et du matériau du corps rotorique dans les encoches ( 12 ) de barres conductrices, il est mis, avant la coulée sous pression, respectivement une couche adhérente choisie de manière à provoquer par la coulée sous pression la diffusion l'un dans l'autre du matériau des barres conductrices et du matériau du corps rotorique en formant ainsi la liaison métallurgique de manière à maintenir sur les surfaces limites les barres ( 10 ) conductrices, lors du fonctionnement du rotor ( 1 ) à cage, dans les encoches (12) des barres conductrices et à maintenir les bagues (4, 5) de court-circuit dans les évidements ( 6 , 7 ) annulaires de court-circuit.

2. Procédé suivant la revendication 1,
dans lequel on choisit la couche d'adhérence de manière à renforcer, par pression isostatique à chaud, la diffusion l'un dans l'autre du matériau de la cage et du matériau du corps rotorique.

3. Procédé suivant la revendication 1 ou 2,
dans lequel les barres (11) conductrices ainsi que les bagues ( 4 , 5 ) de court-circuit sont en cuivre et la couche d'adhérence contient du nickel.

4. Procédé suivant l'une des revendications 1 ou 2,
dans lequel les barres ( 11 ) conductrices ainsi que les bagues (4, 5) de court-circuit sont en aluminium et la couche d'adhérence contient du zinc.

5. Rotor à cage pour un moteur asynchrone comprenant un corps ( 2 ) rotorique qui a une section (10) de barres conductrices, laquelle a une multiplicité d'encoches ( 12 ) de barres conductrices, ayant respectivement des barres ( 11 ) conductrices qui y sont incorporées, les encoches ( 12 ) de barres conductrices étant formées respectivement de deux flancs d'encoche parallèles entre eux et d'un fond d'encoche s'étendant entre les flancs d'encoche et le rotor ( 1 ) à cage étant fabriqué par un procédé suivant l'une des revendications 1 à 4.

6. Rotor à cage suivant la revendication 5,
dans lequel chaque fond d'encoche est convexe de sorte que les barres ( 11 ) conductrices sont sur leur côté, à l'intérieur radialement, arrondies respectivement avec formation d'un pont ( 14 ) de barre conductrice.

7. Rotor à cage suivant la revendication 6,
dans lequel les sections transversales des barres ( 11 ) conductrices sont plus larges dans la direction radiale que dans la direction périphérique.
